# EUROPEAN PATENT APPLICATION

(11) **EP 3 474 004 A1**
(43) Date of publication of application: **24.04.2019**
(21) Application number: 17813026.6
(22) Date of filing: 26.04.2017
(51) Int. Cl.: G01N 21/88, B24C 9/00

(54) **APPEARANCE INSPECTION DEVICE, SURFACE PROCESSING SYSTEM, APPEARANCE INSPECTION METHOD, PROGRAM, AND PROJECTION MATERIAL REPLACEMENT DETERMINATION METHOD**

(30) Priority: 15.06.2016 JP 2016118746; 20.04.2017 JP 2017083355
(71) Applicant: SCREEN Holdings Co., Ltd., Kyoto 602-8585 (JP)
(72) Inventor: TERAOKA, Shigenori, Kyoto-shi Kyoto 602-8585 (JP)
(74) Representative: Kilian Kilian & Partner
(86) International application number: PCT/JP2017/016481
(87) International publication number: WO 2017/217121

(57) **Abstract**

An appearance inspection apparatus is intended to reduce overdetection of a defect in an appearance inspection. The appearance inspection apparatus 3 in the surface treatment system 1 images an inspection target Wk by an imaging part 31 and includes a replacement determination part 404 which determines that a shot material 211 needs replacement in an ejector 2 when the difference between the brightness level of an inspection target region in a captured image and the brightness level of a reference region in a reference image is a predetermined threshold or more. Thus, the determination of the replacement of the shot material 211 is executed within a range allowing effective reduction of overdetection by the appearance inspection apparatus 3 and thereby the appearance inspection apparatus 3 is capable of reducing overdetection of the defect.

## Description

### [Technical Field]

The present invention relates to a technique of inspecting a surface of an inspection target subjected to surface treatment with a shot material, and a technique of determining the necessity to replace the shot material in an ejector.

### [Background Art]

A metallic component used in a driving part of an automobile has conventionally been manufactured by forging or casting, for example. After manufacture of the metallic component, the resultant metallic component is subjected to what is called an appearance inspection conducted to determine the presence or absence of a defect such as a flaw. Such an appearance inspection on the metallic component has conventionally been conducted visually by a worker. However, relying on the visual inspection by a worker causes nonuniformity in time required for the inspection or inspection result between multiple workers. Even if the inspection is conducted by one worker, a poor physical condition or a lapse in concentration of the worker may make the inspection time consuming or cause the risk of missing a defect. Hence, an apparatus allowing implementation of an appearance inspection on a metallic component automatically at high speed has been desired to be developed.

In this regard, patent literature 1 suggests an appearance inspection apparatus that generates a composite inspection image by capturing images of a metallic component as a target under multiple lighting conditions, and extracts a region with a shape defect at the target based on the composite inspection image and a reference image.

### [Citation List]

### [Patent Literature]

Patent Literature 1: Japanese Patent Application Publication No. 2015-068668

### [Summary]

### [Technical Problem]

The foregoing appearance inspection conducted by comparing a reference image and a captured image encounters a problem called "overdetection" by which, even in the absence of a defect on a surface of a target appearing in the captured image, a difference of a certain degree or more existing between the reference image and the captured image is detected as a defect. If a substance not considered as a defect (false defect) is extracted as a defect by overdetection, the appearance inspection apparatus determines that a defect is present at a target without a defect. This affects the manufacture yield of the target. Thus, reducing overdetection is required.

The present invention has been made in view of the above-described problem. The present invention is intended to reduce overdetection in an appearance inspection apparatus and to conduct an inspection with a high degree of accuracy.

### [Solution to Problem]

One aspect of the present invention is an appearance inspection apparatus that inspects a surface of an inspection target subjected to surface treatment with a shot material. The apparatus includes: an imaging part that captures an image of the surface of the inspection target to acquire a captured image; a storage that contains a reference image corresponding to the captured image; a defect candidate detector that detects a defect candidate region in the captured image based on the captured image and the reference image; and a replacement determination part that determines the necessity to replace the shot material based on the brightness level of an inspection target region in the captured image and the brightness level of a reference region in the reference image corresponding to the inspection target region.

Another aspect of the present invention is an appearance inspection method of inspecting a surface of an inspection target subjected to surface treatment with a shot material. The method includes: a preparation step of preparing a captured image by capturing an image of the surface of the inspection target and a reference image corresponding to the captured image; a defect candidate detection step of detecting a defect candidate region in the captured image based on the captured image and the reference image; and a replacement determination step of determining the necessity to replace the shot material based on the brightness level of an inspection target region in the captured image and the brightness level of a reference region in the reference image corresponding to the inspection target region.

### [Advantageous Effects of Invention]

The present invention is capable of reducing overdetection by the appearance inspection apparatus.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### [Brief Description of Drawings]

Fig. 1 is a drawing showing the configuration of a surface treatment system.
Fig. 2 is a drawing showing the configuration of the controller.
Fig. 3 is a block diagram showing functions and configuration realized by the controller.
Fig. 4 is a flow chart showing operations of the surface treatment system.
Fig. 5 is a flow chart showing the image preparation step in Fig. 4 in detail.
Fig. 6 is a drawing schematically showing a captured image acquired by the imaging part.
Fig. 7 is a drawing schematically showing a reference image acquired by the imaging part.
Fig. 8 is graph showing a relationship between the overdetection ratio and a difference in brightness level between the replacement inspection target region and the replacement reference region.

### [Description of Embodiments]

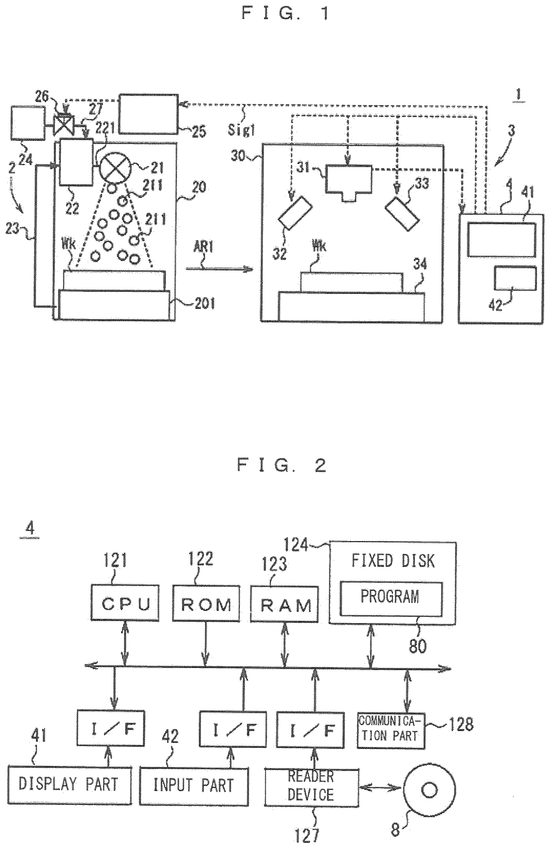

Fig. 1 is a drawing showing the configuration of a surface treatment system 1 according to an embodiment of the present invention. The surface treatment system 1 includes an ejector 2 and an appearance inspection apparatus 3. The ejector 2 is to treat a surface of a three-dimensional treatment target Wk with a shot material. The appearance inspection apparatus 3 is to inspect the appearance of an inspection target Wk having a surface not mirror finished but is given asperities through the surface treatment by the ejector 2. Specifically, the treatment target Wk to be treated by the ejector 2 is also the inspection target Wk to be inspected by the appearance inspection apparatus 3.

### <Inspection target>

The inspection target Wk is a metallic component formed by forging or casting, for example. The inspection target Wk has a surface in a matte state with tiny asperities, specifically, in a frosted state. In other words, the surface of the inspection target Wk has a gloss while causing irregular reflection of light. The glossiness of the surface of the inspection target Wk is preferably from about 20 to about 60. The glossiness is an index representing a degree of a gloss at a surface of an object one-dimensionally determined by giving attention to a ratio of regularly reflected light or a directional distribution of diffusely reflected light, etc. The glossiness is measured using a glossmeter conforming to a glossiness measurement method defined under industrial standards such as JIS.

The surface of the inspection target Wk is treated through shot blasting using a certain shot material by the ejector 2 such as sandblasting or steel shot blasting, for example. The surface of the inspection target Wk has a shape from which a boundary between an upper surface or a lower surface and a side surface, a corner at an edge, or a burr caused during shape formation has been removed (this shape is what is called an R shape). A burr may be removed by shot blasting, or by post treatment performed after the shot blasting. The inspection target Wk is, for example, any type of components used for universal joints such as a metallic component to be used in a driving part for driving a vehicle, an airplane, or a power generator, for example.

A defect at the surface of the inspection target Wk is a recessed or projecting site, compared to an ideal shape. The defect may be a dent, a scratch, or a machining failure, for example. The defect may also be a foreign matter adhering to the surface.

### <Configuration of ejector 2>

The configuration of the ejector 2 will be described by referring to Fig. 1. The ejector 2 is to treat the surface of the inspection target Wk with a shot material. The ejector 2 includes a chamber 20, an ejection part 21, a shot material supplier 22, a shot material collector 23, a shot material storage 24, and a supply controller 25.

The chamber 20 houses the inspection target Wk carried into the chamber 20 through a gate not shown in the drawings for letting the inspection target Wk in and out. A holder 201 is provided inside the chamber 20. The inspection target Wk carried in is held by the holder 201.

The ejection part 21 ejects a shot material 211 to the inspection target Wk housed in the chamber 20 and held by the holder 201 while accelerating the shot material 211. The ejection part 21 is an impeller that makes the shot material 211 collide with a rotating vane, and accelerates and pushes out the shot material 211 using centrifugal force resulting from the rotation. The ejection part 21 is not limited to the foregoing in terms of embodying the present invention. The ejection part 21 may be a nozzle for accelerating and ejecting the shot material 211 using compressed air.

Metallic beads are used as the shot material 211. A material for the shot material 211 is selected appropriately in consideration of the hardness of the inspection target Wk or a degree of surface treatment on the inspection target Wk. For example, the material may be steel balls, stainless steel balls, or aluminum balls. The shot material 211 is ejected by the ejection part 21 and is caused to collide with the inspection target Wk. By doing so, the shot material 211 is used for polishing the surface or removing a burr from the surface of the inspection target Wk. The shot material 211 is not limited to metallic beams but may also be glass beads or resin-based beads, for example.

The shot material supplier 22 supplies the ejection part 21 with the shot material 211. The shot material supplier 22 is connected to the ejection part 21 by a pipe 221. The shot material supplier 22 contains the shot material 211 primarily, and feeds the stored shot material 211 sequentially to the ejection part 21 through the pipe 221.

The shot material collector 23 collects the shot material 211 existing at a lower part of the chamber 20 after being ejected from the ejection part 21, and carries the collected shot material 211 to the shot material supplier 22. The shot material collector 23 may be provided with a screening mechanism such as a filter for discriminating between the collected shot material 211 and burr dust derived from the inspection target Wk. The shot material collector 23 is connected to a discharge mechanism not shown in the drawings for discharging the collected shot material 211 to the outside without carrying the collected shot material 211 to the shot material supplier 22. In this way, the shot material 211 is discharged to the outside, where appropriate.

The shot material storage 24 primarily contains a new shot material 211 carried in from the outside, and supplies the shot material supplier 22 with the shot material 211. The shot material storage 24 is connected to the shot material supplier 22 by a pipe 27. The pipe 27 includes an on-off valve 26. For example, the shot material storage 24 is a horn-shaped or bell-shaped hopper with an open top and a shrinking bottom. The pipe 27 is located below the shot material storage 24 and connected to the shot material storage 24. When the on-off valve 26 is opened, the shot material 211 in the shot material storage 24 is supplied through the pipe 27 to the shot material supplier 22 with the force of gravity. When the on-off valve 26 is closed, the shot material 211 is not supplied from the shot material storage 24 to the shot material supplier 22.

The supply controller 25 is configured using a computer. The supply controller 25 is electrically connected to the on-off valve 26 to control opening and closing of the on-off valve 26. The on-off valve 26 is in a normally-closed state. In response to input of a shot material replacement signal Sig1 described later to the supply controller 25, the supply controller 25 issues an operation command for the on-off valve 26 to open the on-off valve 26. By doing so, supply of the shot material 211 from the shot material storage 24 to the shot material supplier 22 is started. Input of the shot material replacement signal Sig1 is not the only timing of issuing the operation command for the on-off valve 26 but the timing may be determined freely.

### <Configuration of appearance inspection apparatus 3>

After the ejector 2 performs surface treatment on the inspection target Wk, the inspection target Wk is carried to the appearance inspection apparatus 3 as shown by an arrow AR1 in Fig. 1. Then, the appearance inspection apparatus 3 inspects the surface of the inspection target Wk. The inspection target Wk may be carried from the ejector 2 to the appearance inspection apparatus 3 by a carrier such as a belt conveyor or a robot arm. Alternatively, the inspection target Wk placed on a pallet may be carried by an operator. The ejector 2 and the appearance inspection apparatus 3 are not required to be arranged adjacent to each other but may be arranged at separate places. For example, the ejector 2 and the appearance inspection apparatus 3 may be located at different buildings.

The appearance inspection apparatus 3 includes a body 30 and a controller 4. The body 30 includes an imaging part 31, a light emitter 32, 33 and a holder 34. The inspection target Wk carried in through a gate not shown in the drawings for letting the inspection target Wk in and out is held by the holder 34. The body 30 is provided with a light-shielding cover not shown in the drawings for preventing arrival of external light on the holder 34. The imaging part 31, the light emitters 32 and 33, and the holder 34 are arranged in the light-shielding cover. The controller 4 includes a computer system described later (see Fig. 2) with a display part 41 configured using a display, and an input part 42 configured using a mouse and a keyboard.

Another body 30 is provided when the entire surface of the inspection target Wk is inspected automatically. A reversing mechanism is provided between the two bodies 30 for carrying the inspection target Wk while turning the inspection target Wk upside down.

As shown in Fig. 1, the imaging part 31 is supported by a support not shown in the drawings to be located above the holder 34. The imaging part 31 is usable for acquiring an image of the inspection target Wk on the holder 34 captured directly from above the inspection target Wk. The imaging part 31 includes a two-dimensional image sensor such as a CCD (charge coupled device) or a CMOS (complementary metal-oxide semiconductor) image sensor to acquire an image of multiple tones.

The arrangement of the imaging part 31 is not limited to the foregoing in terms of embodying the present invention. For example, the imaging part 31 may be arranged at a position tilted at a given angle from a position directly above the holder 34, and may be configured to acquire an image of the inspection target Wk on the holder 34 captured from diagonally above the inspection target Wk.

Each of the light emitters 32 and 33 is supported by a support not shown in the drawings to be arranged diagonally above the holder 34. The light emitter 33 is arranged at a position on the opposite side of the light emitter 32 across the imaging part 31, for example, at a position symmetric with the light emitter 32. Each of the light emitter 32 and the light emitter 33 is configured using a bar luminaire with an array of multiple light-emitting diodes (LEDs), and is capable of emitting light to the inspection target Wk on the holder 34 from diagonally above the inspection target Wk.

In the below, a state in which light is emitted from one of the light emitter 32, 33 and the inspection target Wk is illuminated with the one-sided light will be called an "individually illuminated state." A state in which beams of light are emitted from both the light emitter 32, 33 and the inspection target Wk is illuminated with the beams of light coming from multiple directions will be called a "multiplied illuminated state." The individually illuminated state and the multiplied illuminated state will collectively called an "illuminated state" simply.

Fig. 2 shows the configuration of the controller 4. The controller 4 is a computer and has the configuration of a general computer system including a CPU 121, a ROM 122, and a RAM 123. The CPU 121 performs various types of calculation. The ROM 122 contains a basic program. The RAM 123 contains various types of information. The controller 4 further includes a fixed disk 124, the display part 41, the input part 42, a reader device 127, and a communication part 128. The fixed disk 124 contains information. The display part 41 includes a display on which various types of information including an image are presented. The input part 42 includes a keyboard and a mouse for accepting an input from an operator. The reader device 127 reads information from a computer-readable recording medium 8 such as an optical disk, a magnetic disk, or a magneto-optical disk. The communication part 128 transmits and receives signals to and from the structures of the appearance inspection apparatus 3 other than the communication part 128, and to and from the ejector 2. The display part 41 and the input part 42 may be configured integrally using a touch panel.

In the controller 4, a program 80 is read in advance from the recording medium 8 through the reader device 127, and stored into the fixed disk 124. The CPU 121 performs calculation by following the program 80 and using the RAM 123 or the fixed disk 124. The CPU 121 functions as a calculation part in the controller 4. A different structure other than the CPU 121 and functioning as a calculation part may be provided.

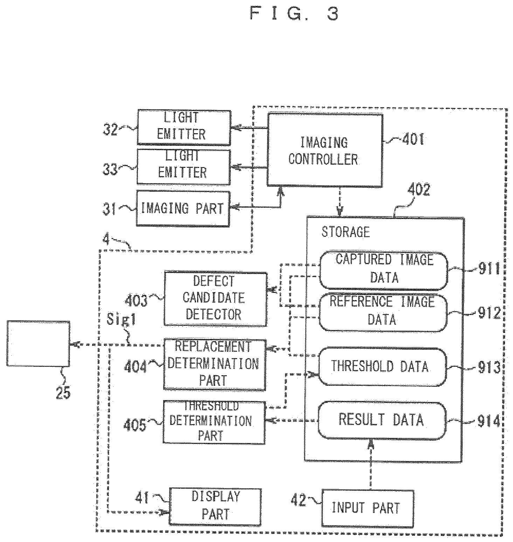

Fig. 3 shows functions realized by implementation of calculation by the controller 4 by following the program 80. An imaging controller 401, a storage 402, a defect candidate detector 403, a replacement determination part 404, and a threshold determination part 405 shown in Fig. 3 correspond to the functions realized by the controller 4. All or some of these functions may be realized by a dedicated electric circuit. Alternatively, these functions may be realized using multiple computers.

The imaging controller 401 controls the imaging part 31 and the light emitters 32, 33 to acquire an image of the inspection target Wk (in an exact sense, data indicating the image). The image data is stored into the storage 402.

As will be described later, each time the imaging controller 401 controls the light emitters 32, 33 to change an illuminated state, the imaging part 31 acquires image data. In the below, an image acquired through imaging by the imaging part 31 will be called a "captured image," and data about the captured image is called "captured image data 911." The captured image data 911 is stored into the storage 402. The storage 402 contains data about "reference images" stored as reference image data 912. Each of the reference images is an ideal image of the inspection target Wk under each illuminated state. Specifically, data about an ideal image corresponding to each illuminated state of the imaging part 31 is prepared in the storage 402 as the reference image data 912. The reference image data 912 is data about a reference image acquired through imaging of the inspection target Wk determined to be a conforming item by the imaging part 31, for example.

The storage 402 contains threshold data 913 and result data 914 in addition to the captured image data 911 and the reference image data 912. The threshold data 913 indicates a predetermined threshold used for the replacement determination part 404 described later to determine the necessity to replace the shot material 211. The result data 914 is used for the threshold determination part 405 to determine the threshold.

The defect candidate detector 403 detects a defect candidate region in a captured image based on the captured image and the reference image. The replacement determination part 404 determines the necessity to replace the shot material 211 based on the brightness level of an inspection target region in the captured image and the brightness level of a reference region in the reference image corresponding to the inspection target region. The replacement determination part 404 makes the determination based on the threshold determined by the threshold determination part 405. The threshold determination part 405 determines the threshold based on the brightness level of the inspection target region in the captured image in which the defect candidate region in this captured image has been detected by the defect candidate detector 403, and information about whether the defect candidate region truly has a defect.

### <Operation of surface treatment system>

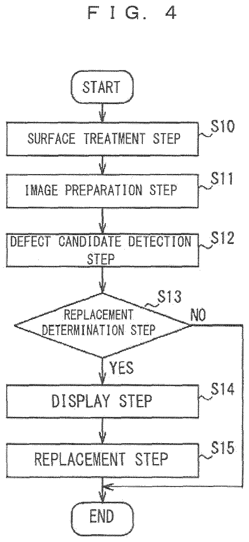

Fig. 4 is a flowchart showing various steps performed by the surface treatment system 1. In the below, the functions of the defect candidate detector 403, the replacement determination part 404 and the threshold determination part 405 will be described by following a flow of the operation of the surface treatment system 1.

First, the operation of the surface treatment system 1 will be described in outline by referring to Fig. 4. First, in the surface treatment system 1, the ejector 2 treats a surface of the inspection target Wk (surface treatment step S10). Next, the inspection target Wk subjected to the surface treatment is carried from the ejector 2 into the appearance inspection apparatus 3, and the imaging part 31 captures an image of the inspection target Wk. In this way, a captured image is prepared (image preparation step S11).

Then, the defect candidate detector 403 detects a defect candidate region (defect candidate detection step S12), and the replacement determination part 404 determines the necessity to replace the shot material 211 (replacement determination step S13). If the replacement determination part 404 determines that the shot material 211 needs replacement, an indication showing the necessity of replacement is displayed on the display part 41 (display step S14). The replacement determination part 404 outputs the shot material replacement signal Sig1. In response to receipt of the shot material replacement signal Sig1, the supply controller 25 of the ejector 2 issues an operation command to open the on-off valve 26. By doing so, a new shot material 211 is supplied from the shot material storage 24 to the shot material supplier 22 (replacement step S15).

The surface treatment step S10 will be described. Before being carried into the appearance inspection apparatus 3, the inspection target Wk is subjected to surface treatment by the ejector 2. First, the inspection target Wk is carried into the chamber 20 of the ejector 2, and the inspection target Wk is held by the holder 201. Next, the shot material 211 is supplied from the shot material supplier 22 to the ejection part 21, and the shot material 211 is ejected from the ejection part 21 toward the inspection target Wk held by the holder 201. The ejected shot material 211 collides with the inspection target Wk and polishes the surface of the inspection target Wk. By doing so, a burr is removed from the surface of the inspection target Wk. This places the surface in a matte state with tiny asperities, specifically, in a frosted state. The glossiness of the surface of the inspection target Wk is preferably from about 20 to about 60. However, this glossiness depends on the freshness of the shot material 211.

The shot material 211 becomes worn as the shot material 211 collides with the inspection target Wk to shrink, compared to the shape of the shot material 211 before being ejected. After the collision, the shot material 211 stays at a lower part of the chamber 20, is collected by the shot material collector 23, and is fed to the shot material supplier 22. Then, the shot material 211 is ejected again to the inspection target Wk. Specifically, the shot material 211 is used repeatedly. A new shot material 211 (specifically, the shot material 211 without wear having an initial bead shape) is used for replenishment by being fed from the shot material storage 24 to the shot material supplier 22.

The glossiness of the surface of the inspection target Wk subjected to surface treatment with the shot material 211 having become worn as a result of repeated use after the replenishment with this shot material 211 is known to be lower than the glossiness of the surface of the inspection target Wk subjected to surface treatment with the new shot material 211 immediately after the replenishment with this new shot material 211. The appearance of the inspection target Wk determined through visual inspection also becomes darker gradually as a result of repeated use of the shot material 211.

Conventionally, the shot material 211 used repeatedly a predetermined number of times or more (or a predetermined period of time or more), the shot material 211 is discharged to the outside of the ejector 2 through the discharge mechanism not shown in the drawings after the shot material 211 is collected by the shot material collector 23. In response to this discharge, a new shot material 211 is supplied from the shot material storage 24 to the shot material supplier 22. This replenishment of the shot material 211 is made regularly, for example, once a day, within a range as a rough indication allowing a burr, etc. to be removed effectively during surface treatment (within a range in which an item is determined to be a conforming item).

Regarding replenishment of the shot material 211 made in the ejector 2 within the range allowing effective removal of a burr, etc., a problem has not become evident as long as the inspection target Wk is inspected visually. However, a new problem described below arises if the inspection target Wk is to be inspected for a defect based on a captured image and a reference image of the inspection target Wk. The glossiness of the surface of the inspection target Wk is reduced gradually with passage of time after replenishment of the shot material 211. This increases a difference between the captured image and the reference image to increase the ratio of overdetection (what is called false information) by which the inspection target Wk is determined to be a defective item by an inspection even if this inspection target Wk is a conforming item. Specifically, inspection accuracy is reduced as a result of repeated use of the shot material 211.

In this regard, to reduce overdetection by the appearance inspection apparatus 3, the inventors have come up with the idea of changing a criterion for making a determination about replacement of the shot material 211 from being within the range "allowing effective removal of a burr, etc.," to being within a range "allowing effective reduction of overdetection by the appearance inspection apparatus 3." As a result of implementation of the following steps from the image preparation step S11 to the replacement determination step S13, the inventors suggest to make a determination about the necessity to replace the shot material 211 by the appearance inspection apparatus 3 as well as conducting a defect inspection by the appearance inspection apparatus 3.

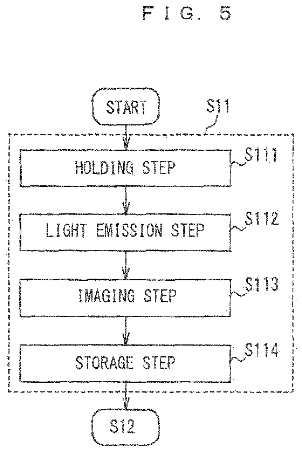

Fig. 5 is a flowchart showing the image preparation step S11 in detail. After the ejector 2 performs the surface treatment on the inspection target Wk in the surface treatment step S10, the image preparation step S11 is performed. When the image preparation step S11 is started, the inspection target Wk taken out of the ejector 2 is carried into the appearance inspection apparatus 3, and held on the holder 34 (holding step S111). The holder 34 has an abutment for positioning, for example. A part of the inspection target Wk determined in advance and the abutment contact each other to place the inspection target Wk at a predetermined position in a predetermined direction. The holder 34 may be a stage with a positioning pin.

Next, the imaging controller 401 issues an operation command for the imaging part 31 and the light emitters 32, 33. While changing an illuminated state by changing turning-on of the light emitters 32, 33, the imaging controller 401 makes the imaging part 31 capture an image (light emission step S112 and imaging step S113). Specifically, the imaging controller 401 performs the light emission step S112 in which an instruction to turn on is given to the light emitters 32, 33 to turn on at least a selected one of the light emitter 32 and the light emitter 33, and the imaging step S113 in which the imaging part 31 captures an image of the inspection target Wk in response to an imaging instruction given from the imaging controller 401 while the light emitter 32 and/or the light emitter 33 is turned on to acquire a captured image.

More specifically, the imaging part 31 first captures an image in an individually illuminated state in which only the light emitter 32 is turned on to acquire a captured image. Then, the light emitter 32 is turned off and the light emitter 33 is turned on. In an individually illuminated state in which only the light emitter 33 is turned on, the imaging part 31 captures an image to acquire a captured image. Finally, the imaging part 31 captures an image in the multiplied illuminated state in which both the light emitter 32 and the light emitter 33 are turned on to acquire a captured image. By doing so, the imaging part 31 acquires three images. The order of changing an illuminated state is not limited to the foregoing order but is determined freely.

Data about the captured images is stored as the captured image data 911 into the storage 402 (storage step S114). As already described, in the storage 402, the data about a reference image corresponding to each captured image is prepared as the reference image data 912. The reference image shows the inspection target Wk (this inspection target Wk is what is called a conforming item) extracted as a reference for a defect inspection under an illuminated state similar to an illuminated state under which the captured image has been acquired. The reference image data 912 may be acquired by capturing an image of the inspection target Wk without a defect, or may be acquired as data about an average image of images of a large number of inspection targets Wk.

Specifically, the inspection target Wk as a conforming item is subjected to the holding step S111, the light emission step S112, the imaging step S113 and the storage step S114 in the same way as that described above to store data about a reference image as the reference image data 912 into the storage 402.

After all the imaging steps intended by the imaging controller 401 are finished, the defect candidate detection step S12 is preformed in which the defect candidate detector 403 detects a defect candidate region in the captured image. For simplification of description given below, processing on image data will be described simply as processing on an image, where appropriate.

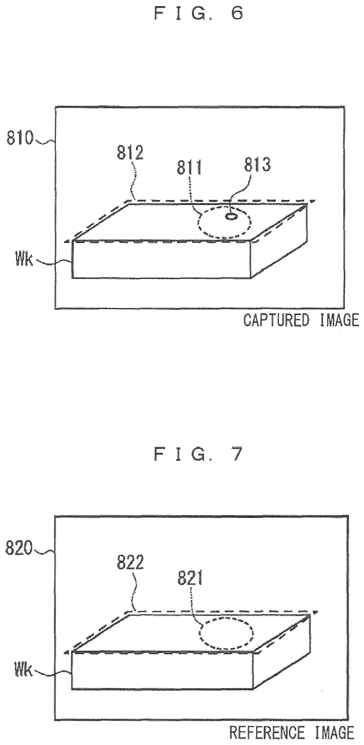

Fig. 6 is an example of a captured image 810 showing the surface of the inspection target Wk acquired by the imaging part 31 in the multiplied illuminated state. For the sake of description, the inspection target Wk appearing in the captured image 810 has a defect. The defect in the captured image 810 is a dent, for example, and is shown as a "defect 813" in Fig. 6. The defect 813 in the captured image 810 is shown to be darker than a surface without a defect. Before implementation of the defect candidate detection step S12, the defect 813 is not recognized as a defect by the appearance inspection apparatus 3. Only after the defect 813 is extracted as a "defect candidate region" described later by implementation of the defect candidate detection step S12, the defect 813 is recognized as a candidate for a defect. The following description is given while attention is focused on a captured image acquired in the multiplied illuminated state. Meanwhile, the same processing is also performed on a captured image acquired in an individually illuminated state.

A surface region of the inspection target Wk appearing in the captured image 810 and to become a target of a defect inspection is illustrated as a "defect inspection target region 811." Likewise, a surface region of the inspection target Wk appearing in the captured image 810 and to be used for making a determination about the necessity to replace the shot material 211 is illustrated as a "replacement inspection target region 812." In the captured image 810, a region designated as the replacement inspection target region 812 has a larger area than the defect inspection target region 811 and encompasses the defect inspection target region 811. However, the replacement inspection target region 812 and the defect inspection target region 811 are not limited to the foregoing regions in terms of embodying the present invention but may be the same region having the same area. Alternatively, the replacement inspection target region 812 and the defect inspection target region 811 may be separate regions independent of each other.

Fig. 7 is an example of a reference image 820 showing the surface of the inspection target Wk as a conforming item acquired by the imaging part 31 in the multiplied illuminated state. A region appearing in the reference image 820 and corresponding to the defect inspection target region 811 in the captured image 810 is illustrated as a "defect reference region 821." Likewise, a region appearing in the reference image 820 and corresponding to the replacement inspection target region 812 in the captured image 810 is illustrated as a "replacement reference region 822."

When the defect candidate detection step S12 is started, the defect candidate detector 403 extracts the captured image data 911 and the reference image data 912 acquired in the multiplied illuminated state and stored in the storage 402. Then, the defect candidate detector 403 compares the defect inspection target region 811 in the captured image 810 and the defect reference region 821 in the reference image 820. For this comparison, a difference or a ratio between a pixel value in the defect inspection target region 811 and a corresponding pixel value in the defect reference region 821 is acquired. If this difference or ratio is a predetermined value or more, a region in the defect inspection target region 811 having this pixel value is extracted as a "defect candidate region 813." Specifically, a region having a difference of a certain degree of more between the defect inspection target region 811 and the defect reference region 821 (a region brighter than or darker than the defect reference region 821 and in which the absolute of a pixel value in the defect inspection target region 811 is larger than a given value, for example) is extracted as the defect candidate region 813.

Further, the defect candidate detector 403 calculates an average of pixels in the replacement inspection target region 812 in the captured image 810 (specifically, an average of luminance values corresponding to the brightness level of the replacement inspection target region 812), and stores the calculated average in association with the extracted defect candidate region 813 into the storage 402 as the result data 914.

In the appearance inspection apparatus 3, whether using the difference or the ratio as a criterion is determined based on a parameter defined in advance in the program 80, or a parameter given by a user using the input part 42. Various predetermined values used in the defect candidate detection by the appearance inspection apparatus 3 are determined based on a parameter defined in advance in the program 80, or a parameter given by a user using the input part 42.

A mode in which the defect candidate detector 403 detects the defect candidate region 813 in the defect candidate detection step S12 is not limited to the foregoing mode. For example, the defect candidate region 813 may be extracted using a comparison technique described in Japanese Examined Patent Publication No. 6-21769. Alternatively, the defect candidate region 813 may be extracted by generating a composite inspection image resulting from combining of multiple captured images using the image composite technique described in Japanese Patent Application Publication No. 2015-68668, and comparing the composite inspection image with a reference image.

Regarding captured images acquired in other illuminated states (an individually illuminated state using only the light emitter 32 and an individually illuminated state using only the light emitter 33), the defect candidate detector 403 compares each of these captured images with the reference image in the same manner as that described above, thereby extracting a defect candidate region.

If a defect candidate region is extracted from any of the three captured images acquired in the corresponding illuminated states based on a condition defined in advance in the program 80, the inspection target Wk appearing in this captured image is determined to have a defect. A result of the determination is stored into the storage 402, and an indication showing the presence of the defect at the inspection target Wk is displayed on the display part 41. The foregoing is not the only way of making the determination in terms of embodying the present invention. The inspection target Wk may be determined to have a defect if defect candidate regions are extracted from all of the three captured images acquired in the corresponding illuminated states. Alternatively, the inspection target Wk may be determined to have a defect if defect candidate regions are extracted from two or more of the three captured images acquired in the corresponding illuminated states. A condition for the defect determination is determined based on a parameter defined in advance in the program 80, or a parameter given by a user using the input part 42.

Referring to Fig. 4, the replacement determination part 404 thereafter performs the replacement determination step S13 to determine the necessity to replace the shot material 211 based on the captured image 810 (see Fig. 6) and the reference image 820 (see Fig. 7).

When the replacement determination step S13 is started, the replacement determination part 404 extracts the captured image data 911 and the reference image data 912 acquired in the multiplied illuminated state and stored in the storage 402. Then, the brightness level of the replacement inspection target region 812 in the captured image 810 and the brightness level of the replacement reference region 822 in the reference image 820 are compared. In the captured image 810 and the reference image 820, a brightness level is expressed in terms of a pixel value (from zero to 255). Increase in a pixel value means a higher brightness level and a higher level of glossiness of the inspection target Wk appearing in an image. A pixel value used herein is synonymous with a luminance value or lightness.

The brightness level of the replacement inspection target region 812 is obtained by calculating the sum of the pixel values of pixels in the replacement inspection target region 812, and dividing the sum by the number of the pixels in the replacement inspection target region 812. Specifically, a brightness level is acquired as an average of the pixel values of the pixels in the replacement inspection target region 812. The brightness level of the replacement inspection target region 812 is not limited to an average of pixel values in terms of embodying the present invention. The brightness level of the replacement inspection target region 812 may be a median of the pixel values of pixels in the replacement inspection target region 812. Alternatively, the sum of the pixel values may be used as it is as the brightness level without obtaining an average.

The brightness level of the replacement reference region 822 is obtained by the same way as that for obtaining the brightness level of the replacement inspection target region 812. If the brightness level of each of these regions is obtained as an average or a median of pixel values of pixels, the number of pixels in the replacement inspection target region 812 and the number of pixels in the replacement reference region 822 may differ from each other.

The brightness level of the replacement inspection target region 812 and the brightness level of the replacement reference region 822 in the reference image 820 are compared by calculating the absolute of a difference between these brightness levels, and determining whether the absolute is a predetermined threshold or more. The threshold is acquired through referring to the threshold data 913 in the storage 402 by the replacement determination part 404. If the absolute is the threshold or more, the replacement determination part 404 determines that the shot material 211 needs replacement in the ejector 2, and outputs the shot material replacement signal Sig1.

A difference between brightness levels is not limited to the absolute of a difference between the brightness level of the replacement inspection target region 812 and the brightness level of the replacement reference region 822 in the reference image 820 in terms of embodying the present invention. For example, a difference between brightness levels may be obtained by calculating a ratio between these brightness levels, and determining whether separation of the calculated value of the ratio from "1" (a value indicating a degree of separation from 1) is a threshold or more.

In this embodiment, the replacement determination step S13 is performed after the defect candidate detection step S12. However, this is not the only order in terms of embodying the present invention. For example, the replacement determination step S13 may be performed before the defect candidate detection step S12. Alternatively, the replacement determination step S13 and the defect candidate detection step S12 may be performed in parallel.

If the replacement determination part 404 outputs the shot material replacement signal Sig1 after implementation of the replacement determination step S13 (in the case of a flow resulting from YES determined in the replacement determination step S13 in Fig. 4), the display step S14 and the replacement step S15 are performed thereafter. If the replacement determination part 404 does not determine that the shot material 211 needs replacement in the replacement determination step S13 and does not output the shot material replacement signal Sig1 (in the case of a flow resulting from NO determined in the replacement determination step S13 in Fig. 4), the display step S14 and the replacement step S15 are not performed and the operation of the surface treatment system 1 is finished.

When the display step S14 is started, the display part 41 receives the shot material replacement signal Sig1 from the replacement determination part 404, and an indication showing the necessity to replace the shot material 211 is displayed on the display part 41. An indication showing the necessity to replace the shot material 211 may be displayed on a display at the display part 41. However, displaying the indication is not the only means of notification to an operator. For example, the operator may be notified of the indication showing the necessity to replace the shot material 211 by means of sound.

When the replacement step S15 is started thereafter, the supply controller 25 of the ejector 2 issues an operation command for the on-off valve 26 to open the on-off valve 26. By doing so, a new shot material 211 is supplied from the shot material storage 24 to the shot material supplier 22 through the pipe 27. In this way, the shot material 211 is replaced in the ejector 2.

The foregoing is not the only configuration in terms of embodying the present invention. For example, the configuration may be such that, if an operator inputs an instruction to replace the shot material 211 through the input part 42 after the indication showing the necessity to replace the shot material 211 is displayed at the display part 41 in the display step S14, the controller 4 transmits the shot material replacement signal Sig1 to the supply controller 25, and the replacement step S15 is performed in response to this transmission as a trigger.

As a result of the foregoing, the operations in a sequence of the surface treatment system 1 are completed. Each time the inspection target Wk having an untreated surface is transferred into the ejector 2 from a previous step, the surface treatment system 1 performs these operations in a sequence.

### <Operation of threshold determination part>

For implementation of the foregoing operations in a sequence, the threshold data 913 about the threshold used in the replacement determination step S13 is stored in advance in the storage 402. The following describes operations of determining the threshold and storing the threshold as the threshold data 913 into the storage 402 performed by the threshold determination part 405. These operations may be performed regularly in the surface treatment system 1, or may be performed based on an instruction to determine a threshold inputted to the input part 42 from an operator.

The threshold may be determined by the threshold determination part 405. The threshold may also be determined through input of a threshold directly from a user to the input part 42 and storage of the input threshold into the storage 402 as the threshold data 913. Before the threshold determination part 405 determines the threshold, the threshold input from the operator may be used. Each time the threshold determination part 405 determines the threshold, the threshold data 913 may be overwritten and updated.

The storage 402 contains the result data 914 stored by the defect candidate detector 403 in the defect candidate detection step S12. The result data 914 is data containing an average of pixels in the replacement inspection target region 812 in the captured image 810 (specifically, an average of luminance values in the replacement inspection target region 812) and the extracted defect candidate region 813 associated with each other.

The operator inspects the inspection target Wk visually having been inspected for a defect by the appearance inspection apparatus 3 and determined to "have a defect" (specifically, the inspection target Wk from which the defect candidate region 813 has been extracted), and determines whether this inspection target Wk truly has a defect. Then, the operator inputs a result of the determination through the input part 42. This makes it possible to acquire information about whether the extracted defect candidate region 813 truly has a defect.

More specifically, the operator inputs an indication through the input part 42 that the designated inspection target Wk "has no defect (is a conforming item)" by checking the display part 41. This makes it possible to acquire information indicating that the extracted defect candidate region 813 has no defect, specifically, that a result of the defect inspection indicating the presence of a defect at this inspection target Wk is overdetection.

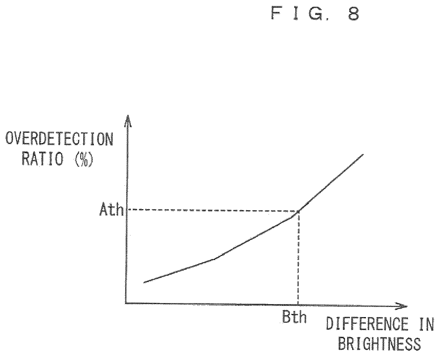

Then, determinations are made about a plurality of inspection targets Wk to acquire information about whether the defect candidate regions 813 extracted by the operator truly have defects. By doing so, an overdetection ratio can be acquired indicating the ratio of inspection targets Wk corresponding to "overdetection" relative to inspection targets Wk determined to "have defects." Specifically, the overdetection ratio responsive to the brightness level of the replacement inspection target region 812 can be acquired. All these results are stored as the result data 914 into the storage 402. In this way, the result data 914 becomes usable for drawing a graph shown in Fig. 8.

Fig. 8 is an example of a graph showing a relationship between the overdetection ratio and a difference in brightness level between the replacement inspection target region 812 and the replacement reference region 822. The horizontal axis shows a difference in brightness level between the replacement inspection target region 812 and the replacement reference region 822. The vertical axis shows the overdetection ratio (%). The replacement reference region 822 has a constant brightness level, so that a difference in brightness level between the replacement inspection target region 812 and the replacement reference region 822 depends on the brightness level of the replacement inspection target region 812. This shows that, as long as the overdetection ratio responsive to the brightness level of the replacement inspection target region 812 is known, the overdetection ratio determined at a given value of a difference in brightness level between the replacement inspection target region 812 and the replacement reference region 822 can be known, as seen from the graph in Fig. 8. Fig. 8 shows that there is a tendency to increase the overdetection ratio in response to increase in the difference in brightness level. This results from the following phenomenon. As time passes after replenishment of the shot material 211, the glossiness of the surface of the inspection target Wk is reduced gradually. This reduces the brightness level of the replacement inspection target region 812 in the captured image 810 with time. Thus, a difference between the captured image 810 and the reference image 820 increases gradually when the inspection target Wk is inspected for a defect based on the captured image 810 and the reference image 820 of the inspection target Wk. This increases the ratio of overdetection (so-called false information) caused by determining the inspection target Wk to be a defective item by an inspection even if this inspection target Wk is a conforming item.

The threshold determination part 405 draws the graph in Fig. 8 in the form of data based on the result data 914. The data is supplemented using various types of interpolation techniques including linear interpolation to compensate for a region without plot data. Then, based on a threshold (Ath) for the overdetection ratio defined in advance in the program 80 or a threshold (Ath) for the overdetection ratio instructed from an operator using the input part 42, the threshold determination part 405 calculates a threshold (Bth) for a corresponding difference in brightness level. Next, the threshold determination part 405 stores the calculated threshold Bth as the threshold data 913 into the storage 402.

As a result of the foregoing, it becomes possible to determine timing of replacing the shot material 211 within a range allowing prevention of excess of the overdetection ratio over the given threshold Ath based on whether a difference in brightness level between the replacement inspection target region 812 and the replacement reference region 822 is the given threshold Bth or more. This can prevent excess of the overdetection ratio over the threshold Ath determined freely.

Specifically, in the appearance inspection apparatus 3 in the surface treatment system 1, the imaging part 31 captures an image of the inspection target Wk, and the replacement determination part 404 determines the necessity to replace the shot material 211. If a difference in brightness level between the replacement inspection target region 812 in the captured image 810 and the replacement reference region 822 in the corresponding reference image 820 is the given threshold Bth or more, the replacement determination part 404 determines that the shot material 211 needs replacement in the ejector 2. This makes it possible to determine replacement of the shot material 211 within a range allowing prevention of excess of the ratio of overdetection by the appearance inspection apparatus 3 over the given threshold Ath, so that the overdetection of a defect by the appearance inspection apparatus 3 can be reduced efficiently.

As has been described above by showing the specific embodiment, in the appearance inspection apparatus of the present invention, the replacement determination part may be configured to determine that the shot material needs replacement if a difference in brightness level between the inspection target region and the reference region is a predetermined threshold or more.

Further, the appearance inspection apparatus of the present invention may further include a threshold determination part that determines the predetermined threshold based on the brightness level of the inspection target region in the captured image in which the defect candidate region has been detected by the defect candidate detector, and information about whether the defect candidate region truly has a defect.

In the appearance inspection apparatus of the present invention, the replacement determination part may be configured to output a shot material replacement signal if the replacement determination part determines that the shot material needs replacement. Further, the present invention may also be configured as a surface treatment system including the foregoing appearance inspection apparatus, and an ejector that treats the surface of the inspection target with the shot material. In the surface treatment system, the ejector includes: an ejection part that ejects the shot material to the inspection target while accelerating the shot material; a shot material supplier that supplies the ejection part with the shot material; a shot material collector that collects the shot material after being ejected from the ejection part and carries the collected shot material to the shot material supplier; a shot material storage that contains the shot material primarily and supplies the shot material supplier with the shot material; and a supply controller that controls supply of the shot material from the shot material storage to the shot material supplier. The supply controller supplies the shot material from the shot material storage to the shot material supplier in response to input of the shot material replacement signal.

Further, the present invention may be configured as a program for causing a computer to inspect a surface of an inspection target subjected to surface treatment with a shot material. Execution of the program by the computer causes the program to perform: a preparation step of preparing a captured image by capturing an image of the surface of the inspection target and a reference image corresponding to the captured image; a defect candidate detection step of detecting a defect candidate region in the captured image based on the captured image and the reference image; and a replacement determination step of determining the necessity to replace the shot material based on the brightness level of an inspection target region in the captured image and the brightness level of a reference region in the reference image corresponding to the inspection target region.

The present invention may be configured as a shot material replacement determination method of determining the necessity to replace a shot material in an ejector. The shot material replacement determination method includes: a preparation step of preparing a captured image by capturing an image of a surface of a treatment target subjected to treatment on the surface with the shot material and a reference image corresponding to the captured image; and a replacement determination step of determining the necessity to replace the shot material based on the brightness level of an inspection target region in the captured image and the brightness level of a reference region in the reference image corresponding to the inspection target region.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

### [Reference Signs List]

- 1: surface treatment system
- 2: ejector
- 3: appearance inspection apparatus
- 4: controller
- 8: recording medium
- 20: chamber
- 21: ejection part
- 22: shot material supplier
- 23: shot material collector
- 24: shot material storage
- 25: supply controller
- 26: on-off valve
- 27.: pipe
- 30: body
- 31: imaging part
- 32, 33: light emitter
- 34: holder
- 41: display part
- 42: input part
- 80: program
- 124: fixed disk
- 127: reader device
- 128: communication part
- 201: holder
- 211: shot material
- 221: pipe
- 401: imaging controller
- 402: storage
- 403: defect candidate detector
- 404: replacement determination part
- 405: threshold determination part
- 810: captured image
- 811: defect inspection target region
- 812: replacement inspection target region
- 813: defect candidate region
- 820: reference image
- 821: defect reference region
- 822: replacement reference region
- 911: captured image data
- 912: reference image data
- 913: threshold data
- 914: result data
- Ath: threshold (for the overdetection ratio)
- Bth: threshold (for a difference in brightness)
- S10: surface treatment step
- S11: image preparation step
- S12: defect candidate detection step
- S13: replacement determination step
- S14: display step
- S15: replacement step
- Sig1: shot material replacement signal
- Wk: inspection target, treatment target

## Claims

1. An appearance inspection apparatus which inspects a surface of an inspection target subjected to surface treatment with a shot material, comprising:
an imaging part which captures an image of the surface of the inspection target to acquire a captured image;
a storage which contains a reference image corresponding to the captured image;
a defect candidate detector which detects a defect candidate region in the captured image based on the captured image and the reference image; and
a replacement determination part which determines a necessity to replace the shot material based on a brightness level of an inspection target region in the captured image and a brightness level of a reference region in the reference image corresponding to the inspection target region.

2. The appearance inspection apparatus according to claim 1, wherein the replacement determination part is configured to determine that the shot material needs replacement if a difference in brightness level between the inspection target region and the reference region is a predetermined threshold or more.

3. The appearance inspection apparatus according to claim 2, further comprising a threshold determination part which determines the predetermined threshold based on the brightness level of the inspection target region in the captured image in which the defect candidate region has been detected by the defect candidate detector and information about whether the defect candidate region truly has a defect.

4. The appearance inspection apparatus according any one of claims 1 through 3, wherein the replacement determination part is configured to output a shot material replacement signal if the replacement determination part determines that the shot material needs replacement.

5. A surface treatment system, comprising:
the appearance inspection apparatus according to claim 4; and
an ejector which treats the surface of the inspection target with the shot material, wherein the ejector includes:
an ejection part which ejects the shot material to the inspection target while accelerating the shot material;
a shot material supplier which supplies the ejection part with the shot material;
a shot material collector which collects the shot material after being ejected from the ejection part and carries the shot material which is collected to the shot material supplier;
a shot material storage which contains the shot material primarily and supplies the shot material supplier with the shot material; and
a supply controller which controls supply of the shot material from the shot material storage to the shot material supplier, and
the supply controller supplies the shot material from the shot material storage to the shot material supplier in response to input of the shot material replacement signal.

6. An appearance inspection method of inspecting a surface of an inspection target subjected to surface treatment with a shot material, comprising:
a preparation step of preparing a captured image by capturing an image of the surface of the inspection target and a reference image corresponding to the captured image;
a defect candidate detection step of detecting a defect candidate region in the captured image based on the captured image and the reference image; and
a replacement determination step of determining a necessity to replace the shot material based on a brightness level of an inspection target region in the captured image and a brightness level of a reference region in the reference image corresponding to the inspection target region.

7. A program for causing a computer to inspect a surface of an inspection target subjected to surface treatment with a shot material, wherein execution of the program by the computer causes the program to perform:
a preparation step of preparing a captured image by capturing an image of the surface of the inspection target and a reference image corresponding to the captured image;
a defect candidate detection step of detecting a defect candidate region in the captured image based on the captured image and the reference image; and a replacement determination step of determining a necessity to replace the shot material based on a brightness level of an inspection target region in the captured image and a brightness level of a reference region in the reference image corresponding to the inspection target region.

8. A shot material replacement determination method of determining the necessity to replace a shot material in an ejector, comprising:
a preparation step of preparing a captured image by capturing an image of a surface of a treatment target subjected to treatment on the surface with the shot material and a reference image corresponding to the captured image; and
a replacement determination step of determining a necessity to replace the shot material based on a brightness level of an inspection target region in the captured image and a brightness level of a reference region in the reference image corresponding to the inspection target region.
